# EUROPEAN PATENT SPECIFICATION

(11) **EP 1 632 335 B1**
(45) Date of publication and mention of the grant of the patent: **07.11.2007**
(21) Application number: 05017333.5
(22) Date of filing: 09.08.2005
(51) Int. Cl.: B29D 30/00, B29D 30/10, B29D 30/20, B29D 30/60, B60C 1/00, B60C 5/14

(54) **Pneumatic tire and manufacturing method of the same**
Luftreifen und Verfahren zu seiner Herstellung
Pneu et procédé de fabrication d'un pneu

(30) Priority: 31.08.2004 JP 2004253091
(43) Date of publication of application: 08.03.2006
(73) Proprietor: SUMITOMO RUBBER INDUSTRIES, LTD., Kobe-shi, Hyogo-ken (JP)
(72) Inventor: Takahashi, Masanori c/o Sumitomo Rubber Ind., Ltd., Chuo-ku Kobe-shi Hyogo-ken (JP); Hayashi, Norio c/o Sumitomo Rubber Ind., Ltd., Chuo-ku Kobe-shi Hyogo-ken (JP)
(74) Representative: Manitz, Finsterwald & Partner GbR

(56) References cited:
- EP-A- 0 854 054
- EP-A- 1 418 043
- EP-A- 1 426 201
- EP-A- 1 428 691
- EP-A- 1 435 301
- WO-A-03/101712
- PATENT ABSTRACTS OF JAPAN vol. 016, no. 370 (M-1292), 10 August 1992 (1992-08-10) & JP 04 118302 A (YOKOHAMA RUBBER CO LTD:THE), 20 April 1992 (1992-04-20)
- PATENT ABSTRACTS OF JAPAN vol. 2003, no. 12, 5 December 2003 (2003-12-05) & JP 2004 148986 A (YOKOHAMA RUBBER CO LTD:THE), 27 May 2004 (2004-05-27)

## Description

### BACKGROUND OF THE INVENTION

The present invention relates to a pneumatic tire in which a barrier rubber layer provided between a carcass and an inner liner is formed by a strip wind body obtained by winding a rubber strip in a circumferential direction, overlapping and spirally, and a manufacturing method of the same.

In a tubeless pneumatic tire, in order to hermetically keep an internal pressure air, an inner liner made of a butyl air impermeable rubber is formed in an inner side of the carcass. However, since the butyl air impermeable rubber has a property that an adhesion property is inferior to a general-purpose rubber (NR, SBR, BR or the like), there is a tendency that a separation is induced with respect to the carcass. Accordingly, there has been generally employed a structure in which a barrier rubber layer improving the adhesion property between the carcass and the inner liner is provided between the carcass and the inner liner, as described in the Japanese published patent application No. 07-186608, Japanese published patent application No. 2002-178714 and the like.

The inner liner is easily brought into contact with the carcass cord on the basis of a rubber flow at a time of vulcanizing, and causes a generation of a carcass cord loose. Further, the inner liner makes its way into a portion between the carcass cords on the basis of the rubber flow so as to be deformed in a wavy shape, and causes a generation of a crack or the like. However, the barrier rubber layer is excellent in an effect of inhibiting the matter, and can secure a high durability of the tire.

On the other hand, the barrier rubber layer is conventionally formed by a long and wide rubber sheet rolled by a calendar roll or the like. In detail, the rubber sheet having a width and a thickness in correspondence to a category of the tire, a tire size and the like, is previously formed by rolling by means of the calendar roll or the like. Further, the long rubber sheet is temporarily taken up in a roll shape so as to be stored. The stored roll-shaped body is carried to a raw tire forming step. In the tire forming step, the barrier rubber layer is formed in a cylindrical shape by winding on a drum at one circle while cutting at a length in correspondence to a tire peripheral length.

EP-A-1 426 201 describes a pneumatic tire with a sealant layer between the inner liner and the carcass layer, which discloses the features of the preamble of claim 1 and a manufacturing method for such a tyre. Further pneumatic tires and manufacturing methods are disclosed in WO 03/101712 A, EP-A-0 854 054, EP-A-1 435 301, EP-A-1 418 043, EP-A-1 428 691, JP 04 118302 A, and JP 2004 148986 A.

### SUMMARY OF THE INVENTION

However, in the conventional forming method mentioned above, there is generated a necessity of preparing rubber sheets having different widths and thicknesses in correspondence to the category of the tire, the tire size and the like. Accordingly, an increase of an intermediate stock is caused, a production efficiency is deteriorated, and an effective utilization of a factory space is prevented.

Accordingly, the present invention is based on forming a barrier rubber layer by a strip wind body obtained by winding a barrier rubber strip in a circumferential direction, overlapping and spirally. Therefore, it is possible to form the barrier rubber layer having various widths and thicknesses, and it is possible to prevent the intermediate stock of the rolled barrier sheet coat from being generated.

As mentioned above, an object of the present invention is to provide a pneumatic tire which can increase a production efficiency and can intend an effective utilization of a factory space, and a manufacturing method of the same.

In order to achieve the object mentioned above, in accordance with a first aspect of the present invention, there is provided a pneumatic tire having the features of claim 1.

Further, in accordance with another aspect of the present invention, there is provided a manufacturing method of the pneumatic tire having the features of claim 3.

Particular embodiments of the invention are the subject of the respective dependent claims.

### BRIEF DESCRIPTION OF THE DRAWINGS

Fig. 1 is a cross sectional view showing an embodiment of a pneumatic tire in accordance with the present invention;
Fig. 2 is a cross sectional view showing a barrier rubber layer together with a carcass and an inner liner;
Fig. 3 is a graph conceptually showing a correlation between an adhesion and a minimum value ML of a torque;
Fig. 4 is a cross sectional view showing a barrier rubber strip;
Fig. 5(A) is a perspective view showing a raw inner liner employing a general method, and Fig. 5(B) is a perspective view showing a raw inner liner employing a strip wind method;
Fig. 6 is a cross sectional view showing a raw barrier rubber forming step;
Fig. 7 is a cross sectional view showing a raw carcass attaching step; and
Figs. 8(A) and 8(B) are cross sectional views showing the other embodiment of the raw barrier rubber forming step.

### DETAILED DESCRIPTION OF THE INVENTION

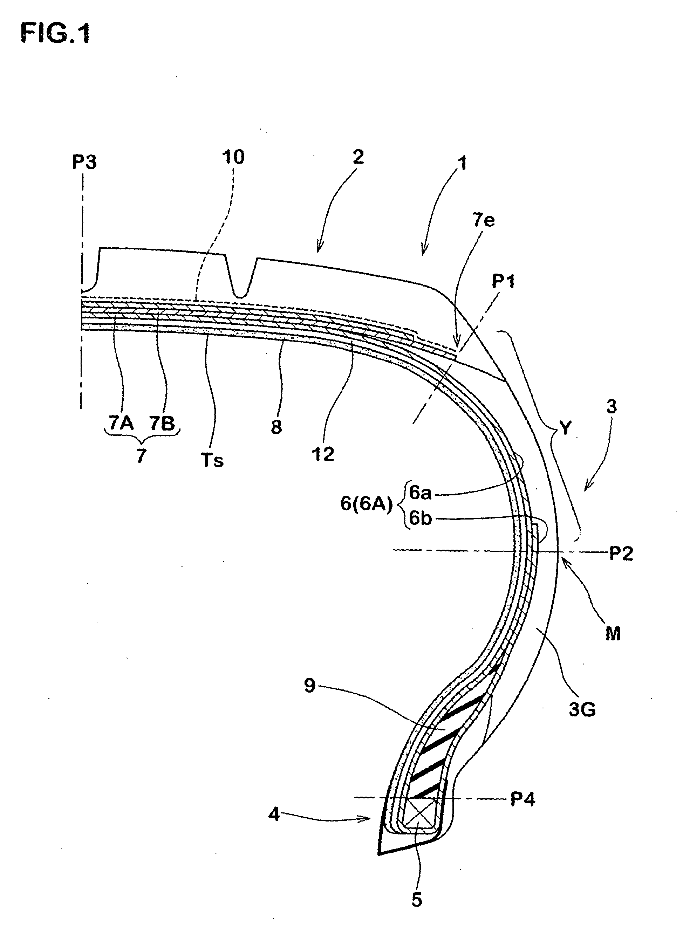

A description will be given of an embodiment in accordance with the present invention together with an illustrated embodiment. Fig. 1 is a cross sectional view of a case that a pneumatic tire in accordance with the present invention is constituted by a tire for a passenger car.

In Fig. 1, a pneumatic tire 1 is provided with a carcass 6 reaching a bead core 5 of a bead portion 4 from a tread portion 2 via a side wall portion 3, a belt layer 7 arranged in an inner side of the tread portion 2 and an outer side of the carcass 6, and an inner liner 8 made of an air impermeable rubber and forming a tire cavity Ts.

The carcass 6 has at least a toroid-shaped carcass main body portion 6a which is astride between the bead cores 5 and 5. In the present embodiment, there is exemplified a structure in which a carcass fold-back portion 6b folded back to an outer side from an inner side in a tire axial direction around the bead core 5 so as to be locked is continuously provided in both sides of the carcass main body portion 6a. In this case, a bead apex rubber 9 extending to an outer side in a radial direction from the bead core 5 is provided between the carcass main body portion 6a and the carcass fold-back portion 6b, and reinforces a portion from the bead portion 4 to the side wall portion 3.

Further, the carcass 6 is formed by one or more, one in the present embodiment, carcass ply 6A in which carcass cords are arranged, for example, at an angle between 75 and 90 degree with respect to a tire circumferential direction. A polyester cord is employed as the carcass cord in the present embodiment, however, an organic fiber cord such as a nylon, a rayon, an aramid or the like and a steel cord in accordance with necessity may be employed in addition thereto.

Next, the belt layer 7 is formed by two or more, two in the present embodiment, belt plies 7A and 7B in which the belt cords are arranged, for example, at an angle between 10 degree and 35 degree with respect to the tire circumferential direction. The respective belt cords intersect between the plies, thereby improving a belt rigidity and firmly reinforcing an approximately entire width of the tread portion 2 with keeping a hoop effect. As the belt cord, the steel cord is employed in the present embodiment, however, a high modulus organic fiber cord such as a polyethylene naphthalate (PEN), a polyethylene terephthalate (PET), an aromatic polyamide or the like may be employed in accordance with necessity in addition thereto.

A band layer 10 can be provided in an outer side in a radial direction of the belt layer 7. The band layer 10 is structured such that band cords made of an organic fiber, for example, a nylon or the like are arranged at an angle equal to or less than five degree with respect to the circumferential direction, for the purpose of improving a high-speed durability. As the band layer 10, it is possible to appropriately use a pair of right and left edge band plies covering only an outer end portion in a tire axial direction of the belt layer 7, or a full band ply covering an approximately entire width of the belt layer. 7. It is possible to use both the elements. In the present embodiment, there is exemplified a structure in which the band layer 10 is constituted by one full band ply.

Next, the inner liner 8 is made of an air impermeable rubber which is arranged in an inner side of the carcass main body portion 6a. In the present embodiment, the inner liner 8 continuously extends between the bead portions 4 and 4 with keeping an approximately uniform rubber thickness. As the air impermeable rubber, it is preferable in view of an air leak resistance to use a butyl group rubber including 50 weight part or more butyl rubber (or a derivative thereof) in 100 weight part rubber material. As the derivative of the butyl rubber, for example, there are employed a halogenated butyl rubber obtained by making a chlorine, a bromine or the like to react with the butyl rubber.

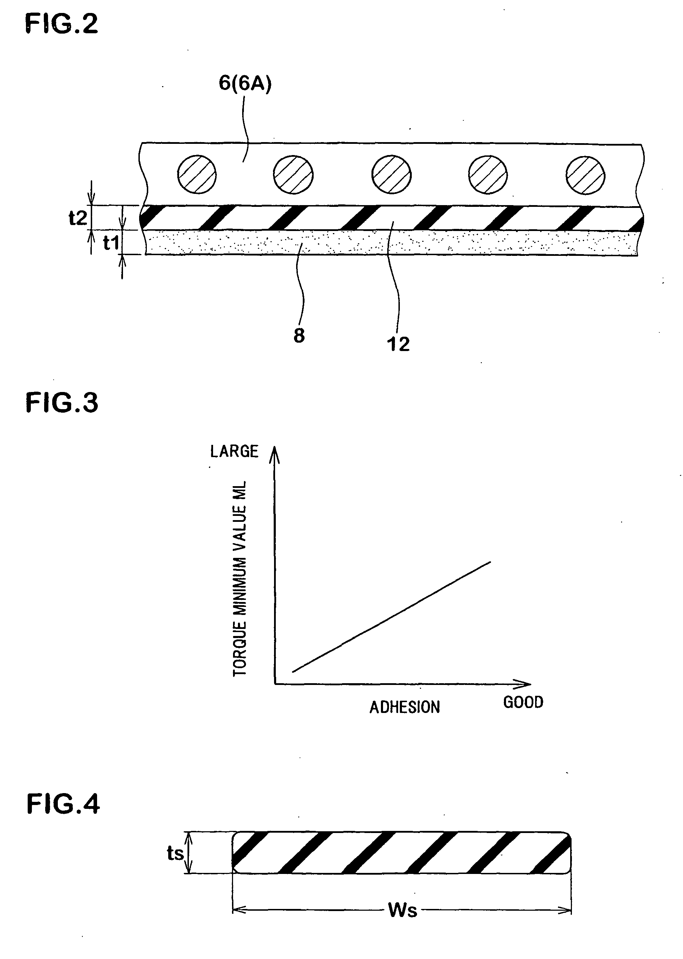

In this butyl group rubber, a diene group rubber such as a natural rubber (NR), an isoprene rubber (IR), a butadiene rubber (BR), a styrene butadiene rubber (SBR) and the like is used as a part of the inner rubber material, in addition to the butyl rubber (or the derivative thereof), that is, as a remaining part of the rubber component. In the butyl group rubber, in the same manner as that of the normal tire rubber, it is possible to add a filler.of a reinforcing agent such as a carbon black or the like, a vulcanizing agent, a vulcanization accelerating agent, a softening agent or the like to the rubber component. Further, as the air impermeable rubber, it is possible to employ a halogenated material of an isobutylene paramethyl styrene copolymer in place of the butyl rubber (or the derivative thereof). In this inner liner 8, in view of the air leak resistance and the tire weight, it is preferable to set a rubber thickness t1 (shown in Fig. 2) to a range between 1.5 and 2.0 mm.

Next, a barrier rubber layer 12 is formed between the inner liner 8 and the carcass main body portion 6a. The barrier rubber layer 12 improves an adhesion property of the inner liner 8 to the carcass main body 6a, that is the adhesion property between the inner liner 8 and the carcass main body portion 6a. Further, it inhibits the contact between the inner liner 8 and the carcass cord, and a ruffling deformation of the inner liner 8 itself, caused by a rubber flow at a time of vulcanizing.

Accordingly, it is necessary that the barrier rubber layer 12 is excellent in the adhesion property, and the present embodiment uses the rubber base material formed only by the diene group rubber, with excluding the butyl rubber (or the derivative thereof). It is preferable that the rubber base material is structured only by the natural rubber (NR) which is particularly excellent in the adhesion property. However, it is possible to use a blend rubber of the natural rubber (NR) and another diene group rubber, and in this case, it is preferable to blend 40 weight part or more natural rubber, further 70 weight part or more.

In order to further improve the adhesion property, it is preferable that 3.0 to 4.0 weight part tackifier is added to 100 weight part rubber base material and the use of the softening agent is excluded. As the tackifier, it is possible to preferably use, for example, a coumarone resin, a phenol resin, a terpene resin, a petroleum hydrocarbon resin, a rosin derivative and the like. Further, in the normal tire, the softening agent is added for improving a workability and a flexibility of the rubber. As the softening agent, there have been known a mineral oil softening agent such as a mineral oil, an aroma oil or the like, a vegetable oil softening agent, a phthalate derivative and the like. However, in the present embodiment, since the softening agent tends to reduce the adhesion property, the softening agent is not used.

In this case, as one of indexes of the adhesion property, there can be listed up an adhesion force between the rubber material and the rubber material in the unvulcanized state. As an index of the adhesion force, the present embodiment employs a minimum value ML of a torque of the rubber in the unvulcanized state measured by using a curelasto graph machine in conformity to JISK6300. This has a correlation as conceptually shown in Fig. 3 between the adhesion force and the minimum value ML of a torque. As shown by a line in Fig. 3, there is a tendency that the adhesion force is increased in accordance with an increase of the minimum value ML of the torque. Accordingly, in order to improve the adhesive property, it is preferable to set the minimum torque ML in the unvulcanized state of the barrier rubber layer 12 to a range between 0.25 and 0.4N • m, for example, larger than the minimum torque ML in the side wall rubber 3G. Further, it is possible to inhibit the rubber flow of the inner liner at a time of vulcanizing, by setting the minimum torque ML. As a result, it is possible to effectively inhibit the contact between the inner liner 8 and the carcass cord, and the ruffling deformation of the inner liner 8 itself caused by the rubber flow. In this case, if the minimum torque ML is more than 0.4N • m, the rubber fluidity is reduced. Accordingly, it is hard to form the barrier rubber layer 12 in accordance with a strip wind method.

Further, in the barrier rubber layer 12, in order to effectively inhibit the crack or the separation from being generated in the inner liner 8, 100% modulus after vulcanizing is set to a range between 2.7 and 4.5 Mpa, so as to be set larger than the 100% modulus in the inner liner 8. In this case, the 100% modulus of the inner liner 8 is normally about between 0.5 and 0.2 Mpa, and the 100% modulus of the side wall rubber is normally about between 1.0 and 2.0 Mpa.

It is necessary that the barrier rubber layer 12 is formed at least in a region Y from a position P1 of an outer end 7e in the tire axial direction of the belt layer 7 to a position P2 of the tire maximum width point M. This is because the tire deformation becomes largest in the region Y at a time of traveling, and the separation between the inner liner 8 and the carcass 6, and the crack due to the ruffling deformation of the inner liner 8 itself tend to be generated.

In this case, the description "position P1 of an outer end 7e in the tire axial direction of the belt layer 7" means a position of a straight line which passes through the outer end 7e and is orthogonal to the carcass 6. Further, the description "position P2 of the tire maximum width point M" means a position of a straight line which passes through the tire maximum width point M and is orthogonal to the carcass 6.

In case of a tire for a heavy load or the like including e.g. a tire for truck or bus in which the carcass cord is constituted by the steel cord, since an interval between the carcass cords is wide, the rubber flow tends to be generated in the inner liner 8 at a time of vulcanizing. That is, the inner liner 8 tends to be brought into contact with the carcass cord, and the ruffling deformation of the inner liner 8 itself is generated. Further, the load applied at a time of traveling becomes high. Accordingly, in the tire for the heavy load or the like, it is preferable that the barrier rubber layer 12 is provided in an entire region between positions P4 and P4 of the bead core 5. The position P4 of the bead core 5 means an outermost end in a radial direction of the bead core 5. However, in the tire for the passenger car in which the carcass cord is constituted by an organic fiber cord, since the interval between the carcass cords is narrow, the rubber flow of the inner liner 8 is small at a time of vulcanizing. Further, the load application at a time of traveling is relatively low. Therefore, in the tire for the ordinal passenger car, it is preferable that the carcass cord is arranged at least in the region Y. Accordingly, an outer end portion in the radial direction of the burrier rubber layer 12 can be terminated between the position P1 of the outer end 7e in the tire axial direction of the belt layer 7 and the position P3 of a tire equator. Further, an inner end portion in the radial direction may be terminated between the position P2 of the tire maximum width point M and the position P4 of the bead core 5. It is possible to achieve a weight saving by setting a necessary small region.

Further, the rubber thickness t2 (shown in Fig. 2) of the barrier rubber layer 12 is set in correspondence to the category of the tire or the like, for example, it is set thick (for example, about 1.0 to 2.0 mm) in the tire for the heavy load, and is set thin (for example, about 0.5 to 1.5 mm) in the tire for the passenger car.

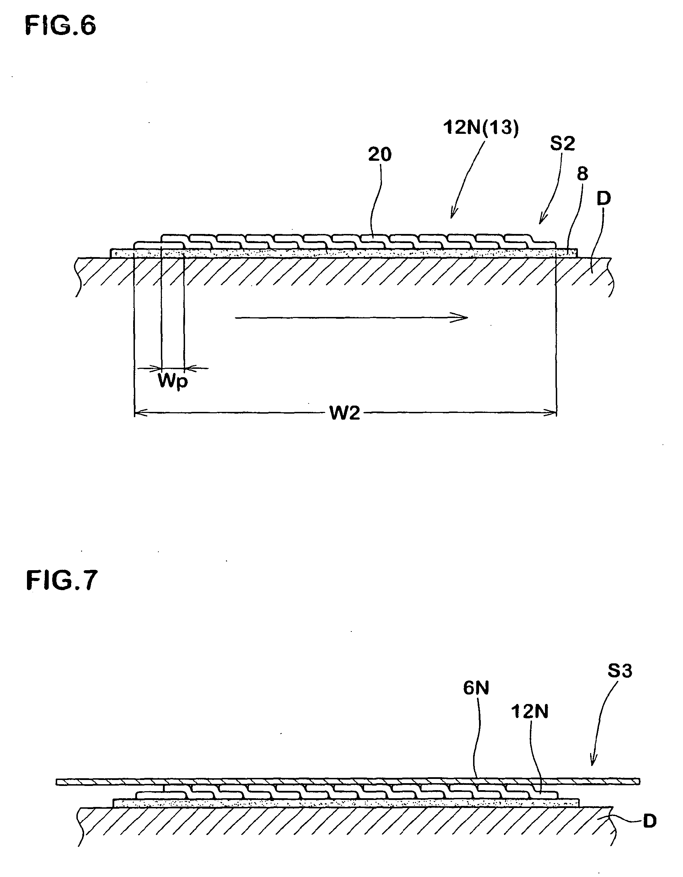

Therefore, in accordance with the present invention, the barrier rubber layer 12 in the vulcanized tire is formed by using the strip wind body 13 obtained by winding the long raw (unvulcanized) barrier rubber strip 20 in the circumferential direction, overlapping and spirally, as shown in Fig. 6. In other words, the strip wind body 13 forms the barrier rubber layer 12 in the vulcanized tire by being assembled in the raw tire and being vulcanized. As the barrier rubber strip 20, as shown in Fig. 4, a thin tape-like rubber strip having a rectangular cross sectional shape in which a width Ws is set between 5 and 50 mm, preferably between 15 and 30 mm and a thickness ts is set between 0.3 and 2.5 mm, preferably between 0.3 and 1.5 mm is preferably used.

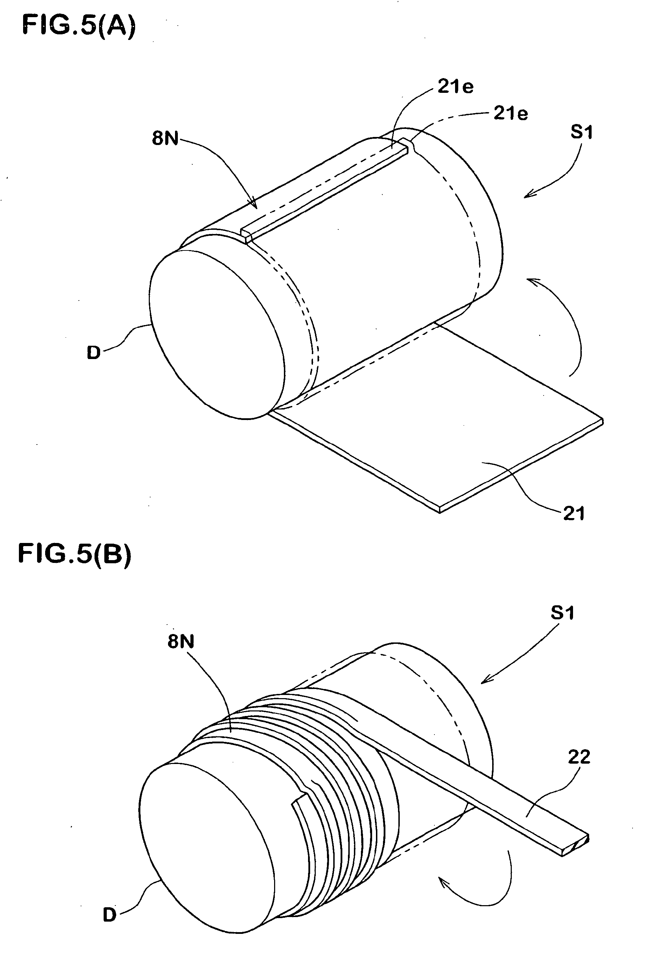

Further, in a manufacturing method of the pneumatic tire 1, at a time of forming the raw tire, as shown in Figs. 5 to 7, the method is constituted as follows:
(1) a raw inner liner forming step S1 of forming a raw inner liner 8N on a drum D (Figs. 5A and 5B);
(2) a raw barrier rubber forming step S2 of forming a raw barrier rubber layer 12N by winding the raw barrier rubber strip 20 on the outer peripheral surface of the raw inner liner 8N so as to overlap in the circumferential direction, forming lateral overlapping portions, and spirally (Fig. 6); and
(3) a raw carcass attaching step S3 of winding the raw carcass ply 6N on the outer peripheral surface of the raw barrier rubber layer 12N (Fig. 7).

The other steps than the steps S1 to S3, for example, the step of attaching the bead core 5 onto the raw carcass ply 6N, the step of inflating (shaping) the raw carcass ply 6N in the toroid shape between the bead cores 5 and 5, the step of sticking the tread ring forming the tread portion 2 onto the inflated raw carcass ply 6N, and the like, are performed in accordance with the same manner as the conventional one. Accordingly, a description will be given only of the steps S1 to S3.

In the raw inner liner forming step S1, the raw inner liner 8N is formed on the drum D. At this time, as shown in Fig. 5(A), it is possible to employ a general method (called as a one-circle winding method, as a matter of convenience) of forming the raw inner liner 8N by winding the calendared wide raw rubber sheet 21 at one circle, and overlapping and jointing between end portions 21e thereof in the peripheral direction. Further, as shown in Fig. 5(B), it is possible to employ a strip wind method of forming the raw inner liner 8N by overlapping and winding the long raw inner liner rubber strip 22 having the rectangular cross sectional shape in the circumferential direction, and spirally.

Further, the raw barrier rubber forming step S2 is shown in Fig. 6. In this step, the raw barrier rubber layer 12N is formed by overlapping and winding the raw barrier rubber strip 20 in the circumferential direction, and spirally on the outer peripheral surface of the raw inner liner 8N formed in the step S1. At this time, the raw barrier rubber layer 12N can be formed in various width W2 and thickness t2 by regulating a winding number of the raw barrier rubber strip 20, and an overlapping width Wq between the adjacent raw barrier rubber strips 20 and 20.

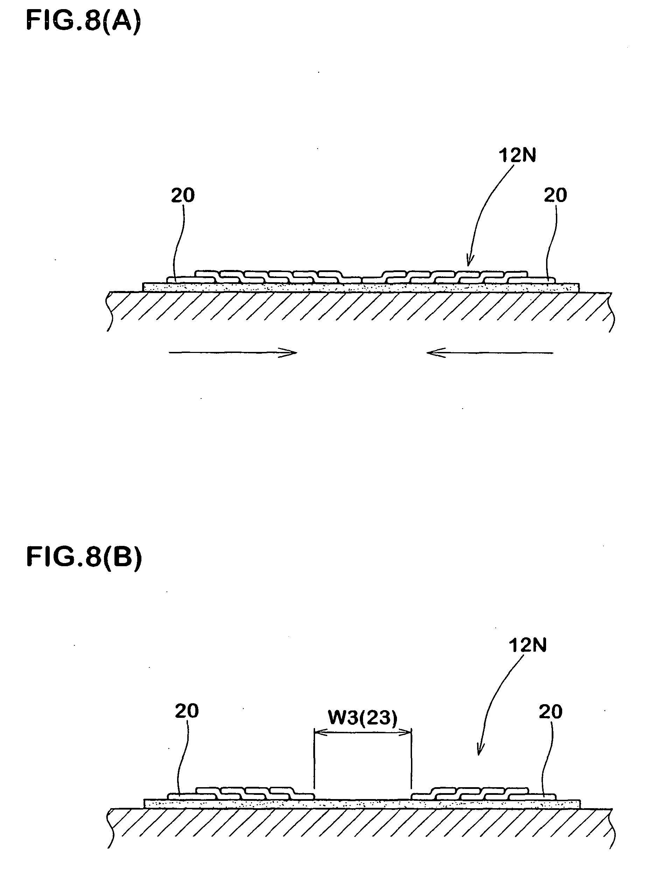

In this case, the present embodiment is exemplified by the structure in which one raw barrier rubber strip 20 is continuously wound from one end of the raw inner liner 8N to the other end. However, as shown in Fig. 8(A), the raw barrier rubber strips may be wound from both ends toward a center or from the center toward both ends by using two raw barrier rubber strips 20. At this time, as shown in the drawing, the raw barrier rubber layer 12N may be provided to continue at the center of the raw inner liner 8N. Further, as shown in Fig. 8(B), a middle missing part 23 having a desired width W3 may be formed in the barrier rubber layer 12N at the center of the raw inner liner 8N. In the case of using two raw barrier rubber strips 20, it is possible to reduce a winding time by half and it is possible to improve a productivity.

Further, in the raw carcass attaching step S3, as shown in Fig. 7, the raw carcass ply 6N is formed in the cylindrical shape by winding the wide sheet-like raw carcass ply 6N at one circle on the outer peripheral surface of the raw barrier rubber layer 12N formed in the step S2 in the same manner as the conventional one, and overlapping and jointing between the end portions in the peripheral direction.

As mentioned above, it is possible to form the barrier rubber layer 12 by using the strip wind body 13 obtained by overlapping and winding the raw barrier rubber strip 20 in the circumferential direction, and spirally. As a result, it is possible to form the various barrier rubber layer 12 at the width W2 and the thickness t2 in correspondence to the requirement. Further, since it is possible to do away with the generation of the conventional intermediate stock, it is possible to improve a production efficiency and it is possible to achieve an effective utilization of the factory space.

The description is in detail given above of the particularly preferable embodiment in accordance with the present invention, however, the present invention can be modified in various aspects without being limited to the illustrated embodiment, but within the scope of the appended claims.

## Claims

1. A pneumatic tire (1) comprising:
a carcass (6) having a carcass main body portion (6a) reaching a bead core (5) of a bead portion (4) from a tread portion (2) via a side wall portion (3);
a belt layer (7) arranged in an inner side of the tread portion (2) and an outer side of said carcass (6); and
an inner liner (8) made of an air impermeable rubber and forming a tire cavity,
**characterized in that**,
a barrier rubber layer (12) improving an adhesion property between the carcass main body portion (6a) and the inner liner (8) is provided between said carcass main body portion (6a) and said inner liner (8), and
wherein said barrier rubber layer (12) is formed by spirally winding a long barrier rubber strip (20) around an outer peripheral surface of the inner liner (8) wound around a drum (D) in a circumferential direction, forming a lateral overlapping portion, and said barrier rubber strip (20) is made of a rubber material having a minimum torque value (ML) larger than the minimum torque value (ML) of a side wall rubber (3G) in the side wall portion (3).

2. A pneumatic tire (1) as claimed in claim 1, wherein said barrier rubber layer (12) is arranged at least in a region (Y) from a position (P1) of an outer end (7e) in a tire axial direction of said belt layer (7) to a position (P2) of a tire maximum width point (M).

3. A method of manufacturing a pneumatic tire (1) including a carcass (6) having a carcass main body portion (6a) reaching each of bead cores (5) in bead portions (4) from a tread portion (2) through side wall portions (3), said method comprising:
a raw inner liner forming step (S1) of forming a raw inner liner (8N) on a drum (D);
a step (S2) of forming a raw barrier rubber layer (12N) on an outer peripheral surface of said raw inner liner (8N) by spirally winding a raw barrier rubber strip (20) in a circumferential direction, forming a lateral overlapping portion, in which said barrier rubber strip (20) is made of a rubber material having a minimum torque value (ML) larger than the minimum torque value (ML) of a side wall rubber (3G) in the side wall portions (3); and
a raw carcass attaching step (S3) of winding a raw carcass ply (6N) on an outer peripheral surface of said raw barrier rubber layer (12N).

4. A method of manufacturing a pneumatic tire (1) as claimed in claim 3, wherein said raw inner liner forming step (S1) forms said raw inner liner (8N) by winding a wide raw rubber sheet (21) at one circle so as to overlap and joint both end portions (21e) in a peripheral direction.

5. A method of manufacturing a pneumatic tire (1) as claimed in claim 3, wherein said raw inner liner forming step (S1) forms said raw inner liner (8N) by overlapping and spirally winding a long raw inner liner rubber strip (22) in a circumferential direction.

6. A method of manufacturing a pneumatic tire (1) as claimed in claim 3, wherein said raw barrier rubber strip (20) is continuously wound from one end of the raw inner liner (8N) to the other end.

7. A method of manufacturing a pneumatic tire (1) as claimed in claim 3, wherein in said step (S2) of forming a raw barrier rubber layer (12N), two raw barrier rubber strips (20) are used and wound from both ends of the raw inner liner (8N) toward a center thereof or from the center toward the both ends.

8. A method of manufacturing a pneumatic tire (1) as claimed in claim 3, wherein said raw barrier rubber layer (12N) has a middle missing part (23) formed at the center of the raw inner liner (8N).

## Patentansprüche

1. Luftreifen (1), umfassend:
eine Karkasse (6) mit einem Karkasshauptkörperabschnitt (6a), der einen Wulstkern (5) eines Wulstabschnittes (4) von einem Laufflächenabschnitt (2) über einen Seitenwandabschnitt (3) erreicht;
eine Gürtelschicht (7), die auf einer Innenseite des Laufflächenabschnitts (2) und einer Außenseite der Karkasse (6) angeordnet ist; und
einen Innerliner (8), der aus einem luftundurchlässigen Kautschuk hergestellt ist und einen Reifenhohlraum bildet,
**dadurch gekennzeichnet, dass**
eine Barrierenkautschukschicht (12), die eine Klebeeigenschaft zwischen dem Karkasshauptkörperabschnitt (6a) und dem Innerliner (8) verbessert, zwischen den Karkasshauptkörperabschnitt (6a) und dem Innerliner (8) vorgesehen ist, und
wobei die Barrierenkautschukschicht (12) durch spiralförmiges Wickeln eines langen Barrierenkautschukstreifens (20) um eine Außenumfangsfläche des um eine Trommel (D) gewickelten Innerliners (8) in einer Umfangsrichtung gebildet ist, wobei ein quer überlappender Abschnitt gebildet ist, und der Barrierenkautschukstreifen (20) aus einem Kautschukmaterial hergestellt ist, der einen minimalen Drehmomentwert (ML) aufweist, der größer ist als der minimale Drehmomentwert (ML) eines Seitenwandkautschuks (3G) in dem Seitenwandabschnitt (3).

2. Luftreifen (1) nach Anspruch 1,
wobei die Barrierenkautschukschicht (12) zumindest in einem Bereich (Y) von einer Position (P1) eines Außenendes (7e) der Gürtelschicht (7) in einer Reifenaxialrichtung bis zu einer Position (P2) eines Punktes (M) einer maximalen Reifenbreite angeordnet ist.

3. Verfahren zum Herstellen eines Luftreifens (1), der eine Karkasse (6) mit einem Karkasshauptkörperabschnitt (6a) umfasst, der jeden der Wulstkerne (5) in Wulstabschnitten (4) von einem Laufflächenabschnitt (2) durch Seitenwandabschnitte (3) erreicht, wobei das Verfahren umfasst:
einen Roh-Innerliner-Bildungsschritt (S1), bei dem ein roher Innerliner (8N) auf einer Trommel (D) gebildet wird;
einen Schritt (S2), bei dem eine rohe Barrierenkautschukschicht (12N) auf einer Außenumfangsfläche des rohen Innerliners (8N) gebildet wird, indem ein roher Barrierenkautschukstreifen (20) in einer Umfangsrichtung spiralförmig gewickelt wird, ein quer überlappender Abschnitt gebildet wird, in welchem der Barrierenkautschukstreifen (20) aus Kautschukmaterial mit einem minimalen Drehmomentwert (ML) hergestellt wird, der größer ist als der minimale Drehmomentwert (ML) eines Seitenwandkautschuks (3G) in den Seitenwandabschnitten (3); und
einen Rohkarkassen-Anbringungsschritt (S3), bei dem eine rohe Karkasslage (6N) auf eine Außenumfangsfläche der rohen Barrierenkautschukschicht (12N) gewickelt wird.

4. Verfahren zum Herstellen eines Luftreifens (1) nach Anspruch 3, wobei der Roh-Innerliner-Bildungsschritt (S1) den rohen Innerliner (8N) bildet, indem eine breite Rohkautschukbahn (21) in einem Kreis gewickelt wird, um beide Endabschnitte (21e) in einer Umfangsrichtung zu überlappen und zusammenzufügen.

5. Verfahren zum Herstellen eines Luftreifens (1) nach Anspruch 3, wobei der Roh-Innerliner-Bildungsschritt (S1) den rohen Innerliner (8N) bildet, indem ein langer Roh-Innerliner-Kautschukstreifen (22) in einer Umfangsrichtung überlappt und spiralförmig gewickelt wird.

6. Verfahren zum Herstellen eines Luftreifens (1) nach Anspruch 3, wobei der rohe Barrierenkautschukstreifen (20) kontinuierlich von einem Ende des rohen Innerliners (8N) zu dem anderen Ende gewickelt wird.

7. Verfahren zum Herstellen eines Luftreifens (1) nach Anspruch 3, wobei in dem Schritt (S2), bei dem eine rohe Barrierenkautschukschicht (12N) gebildet wird, zwei rohe Barrierenkautschukstreifen (20) verwendet werden und von beiden Enden des rohen Innerliners (8N) in Richtung seiner Mitte oder von der Mitte in Richtung der beiden Enden gewickelt werden.

8. Verfahren zum Herstellen eines Luftreifens (1) nach Anspruch 3, wobei die rohe Barrierenkautschukschicht (12N) einen mittleren fehlenden Teil (23) aufweist, der in der Mitte des rohen Innerliners (8N) gebildet ist.

## Revendications

1. Bandage pneumatique (1) comprenant :
une carcasse (6) ayant une partie de corps principal de carcasse (6a) atteignant une tringle (5) d'une partie de talon (4) à partir d'une partie de bande de roulement (2) via une partie de paroi latérale (3) ;
une couche de ceinture (7) agencée dans un côté interne de la partie de bande de roulement (2) et un côté externe de ladite carcasse (6) ; et
un revêtement interne (8) réalisé avec un caoutchouc imperméable à l'air et formant une cavité de bandage,
**caractérisé en ce que** :
une couche de caoutchouc de barrière (12) améliorant une propriété d'adhérence entre la partie de corps principal de carcasse (6a) et le revêtement interne (8) est prévue entre ladite partie de corps principal de carcasse (6a) et ledit revêtement interne (8), et
dans lequel ladite couche de caoutchouc de barrière (12) est formée en enroulant en spirale une longue bande de caoutchouc de barrière (20) autour d'une surface périphérique externe du revêtement interne (8) enroulé autour d'un tambour (D) dans une direction circonférentielle, formant une partie de chevauchement latéral, et ladite bande de caoutchouc de barrière (20) est réalisée avec un caoutchouc ayant une valeur de couple minimum (ML) supérieure à la valeur de couple minimum (ML) d'un caoutchouc de paroi latérale (3G) dans la partie de paroi latérale (3).

2. Bandage pneumatique (1) selon la revendication 1, dans lequel ladite couche de caoutchouc de barrière (12) est agencée au moins dans une région (Y) d'une position (P1) d'une extrémité externe (7e) dans la direction axiale du bandage de ladite couche de ceinture (7) jusqu'à une position (P2) d'un point de largeur maximum du bandage (M).

3. Procédé pour fabriquer un bandage pneumatique (1) comprenant une carcasse (6) ayant une partie de corps principal de carcasse (6a) atteignant chacune des tringles (5) dans les parties de talon (4) à partir d'une partie de bande de roulement (2) à travers les parties de paroi latérale (3), ledit procédé comprenant :
une étape de formation de revêtement interne cru (S1) consistant à former un revêtement interne cru (8N) sur un tambour (D) ;
une étape (S2) consistant à former une couche de caoutchouc de barrière cru (12N) sur une surface périphérique externe dudit revêtement interne cru (8N) en enroulant en spirale une bande de caoutchouc de barrière cru (20) dans une direction circonférentielle, formant une partie de chevauchement latéral, dans laquelle ladite bande de caoutchouc de barrière (20) est réalisée avec un caoutchouc ayant une valeur de couple minimum (ML) supérieure à la valeur de couple minimum (ML) d'un caoutchouc de paroi latérale (3G) dans les parties de paroi latérale (3) ; et
une étape de fixation de carcasse crue (S3) consistant à enrouler un pli de carcasse cru (6N) sur une surface périphérique externe de ladite couche de caoutchouc de barrière cru (12N).

4. Procédé pour fabriquer un bandage pneumatique (1) selon la revendication 3, dans lequel ladite étape de formation de revêtement interne cru (S1) forme ledit revêtement interne cru (8N) en enroulant une large feuille de caoutchouc cru (21) sur un cercle afin de chevaucher et d'assembler les deux parties d'extrémité (21e) dans une direction périphérique.

5. Procédé pour fabriquer un bandage pneumatique (1) selon la revendication 3, dans lequel ladite étape de formation de revêtement interne cru (S1) forme ledit revêtement interne cru (8N) en chevauchant et en enroulant en spirale une longue bande de caoutchouc de revêtement interne cru (22) dans une direction circonférentielle.

6. Procédé pour fabriquer un bandage pneumatique (1) selon la revendication 3, dans lequel ladite bande de caoutchouc de barrière cru (20) est enroulée de manière continue à partir d'une extrémité du revêtement interne cru (8N) jusqu'à l'autre extrémité.

7. Procédé pour fabriquer un bandage pneumatique (1) selon la revendication 3, dans lequel, dans ladite étape (S2) consistant à former une couche de caoutchouc de barrière cru (12N), on utilise deux bandes de caoutchouc de barrière cru (20) et on les enroule à partir des deux extrémités du revêtement interne cru (8N) vers leur centre ou à partir du centre vers les deux extrémités.

8. Procédé pour fabriquer un bandage pneumatique (1) selon la revendication 3, dans lequel ladite couche de caoutchouc de barrière cru (12N) a une partie manquante centrale (23) formée au centre du revêtement interne cru (8N).
